Europäisches Patentamt

European Patent Office

Office européen des brevets

(11) Numéro de publication: **0 284 488**
**B1**

(12) **FASCICULE DE BREVET EUROPEEN**

(45) Date de publication du fascicule du brevet:
31.10.90

(51) Int. Cl.⁵: **B60R 16/02**

(21) Numéro de dépôt: 88400596.8

(22) Date de dépôt: 14.03.88

(54) Faisceau électrique de véhicule automobile.

(30) Priorité: 18.03.87 FR 8703754

(43) Date de publication de la demande:
28.09.88 Bulletin 88/39

(45) Mention de la délivrance du brevet:
31.10.90 Bulletin 90/44

(84) Etats contractants désignés:
DE GB IT

(56) Documents cités:
EP-A- 0 235 924
DE-A- 1 415 609
DE-A- 1 515 626
DE-A- 1 938 128
DE-A- 3 337 596
FR-A- 2 217 908
US-A- 3 836 415

PATENT ABSTRACTS OF JAPAN,
vol. 10, no. 134 (M-479)[2191], 17 mai 1986; &
JP-A-60 259 548 (NISSAN JIDOSHA K.K.) 21-12-1985

(73) Titulaire: AUTOMOBILES PEUGEOT, 75, avenue de la
Grande Armée, F-75116 Paris(FR)
Titulaire: AUTOMOBILES CITROEN, 62 Boulevard
Victor-Hugo, F-92200 Neuilly-sur-Seine(FR)

(72) Inventeur: Pajot, Jean-Claude, 6, rue Marcel Martin,
F-95430 Auvers sur Oise(FR)

(74) Mandataire: Lanceplaine, Jean-Claude et al, CABINET
LAVOIX 2, Place d'Estienne d'Orves, F-75441 Paris
Cédex 09(FR)

ACTORUM AG

## Description

La présente invention concerne un faisceau électrique interne à l'habitacle d'un véhicule automobile, tel que défini dans le préambule de la revendications 1 et connu par exemple du document DE-A 1 415 609.

Dans un véhicule automobile, il est nécessaire de réaliser la connexion de dispositifs électriques se trouvant dans l'habitacle, tels que des boutons ou manettes de commande, des vitres électriques, des moyens d'éclairage ou des fusibles, soit entre eux, soit avec d'autres moyens électriques disposés dans le compartiment moteur du véhicule. On utilise, pour réaliser cette connexion, un ou plusieurs faisceaux électriques composés de conducteurs souples disposés en nappe et formant une pieuvre dont les bras partent dans différentes directions. Chacune des extrémités de ces bras sont munies d'un ou plusieurs connecteurs. Le faisceau électrique est fixé sur la caisse du véhicule et certains éléments du faisceau passent à l'intérieur de corps creux de la structure, ce qui nécessite habituellement une pose manuelle. On réalise ensuite le raccordement des extrémités du faisceau aux différents éléments ou appareillages électriques.

Cette technique habituelle de montage du faisceau électrique d'un véhicule automobile présente différents inconvénients qui peuvent se traduire par une qualité défectueuse du montage et un temps d'exécution excessivement long de l'opération de montage.

En effet, cette opération ne peut être effectuée que manuellement, car les robots ne peuvent manipuler que des pièces rigides ou semi-rigides. Or, un faisceau de connexion électrique est généralement souple, de sorte que cette opération ne peut être automatisée.

L'objectif poursuivi par cette invention consiste à rendre automatique le montage du faisceau électrique interne à l'habitacle.

Dans ce but, selon l'invention, le connecteur multiple est rigidement solidaire du tronçon rigide.

Sans cette solidarité, un robot assurant l'approche et la mise en place du tronçon ne pourrait en même temps fixer ou enficher le connecteur; cette opération devrait être effectuée ultérieurement, manuellement.

Un faisceau électrique comportant des tronçon rigides est certes connu par DE-A 1 415 609 mais les connecteurs sont disposés en bout de tronçons souples.

Suivant d'autres caractéristiques :
- le corps rigide est réalisé en matière plastique isolante, telle qu'une mousse durcie surmoulée sur les fils et sur les connecteurs ;
- le faisceau comporte un tronçon rigide qui longe un bord latéral du plancher du véhicule et qui est fixé à la structure dudit véhicule par des attaches élastiques ;
- ledit tronçon rigide comporte au moins un appendice transversal qui traverse un montant de la structure du véhicule, et qui s'y maintient par fixation élastique de son extrémité munie d'un connecteur, notamment pour l'alimentation électrique d'une porte de véhicule ;
- ledit tronçon rigide est relié par un tronçon transversal souple à un second tronçon rigide longeant l'autre bord latéral du plancher du véhicule.

L'invention sera mieux comprise à l'aide de la description qui va suivre, donnée uniquement à titre d'exemple, et faite en se référant aux dessins annexés sur lesquels :

- la Fig. 1 est une vue en perspective d'une portion inférieure de l'habitacle d'un véhicule, siège avant retiré, et muni du faisceau électrique conforme à l'invention ;
- la Fig. 2 est une vue en coupe suivant 2-2 de la Fig. 1 d'un tronçon du faisceau électrique au niveau d'une porte avant ;
- la Fig. 3 est une vue en coupe suivant 3-3 de la Fig. 1 d'un tronçon du faisceau électrique au niveau d'une porte arrière ;
- la Fig. 4 est une vue en coupe suivant 4-4 de la Fig. 1 ;

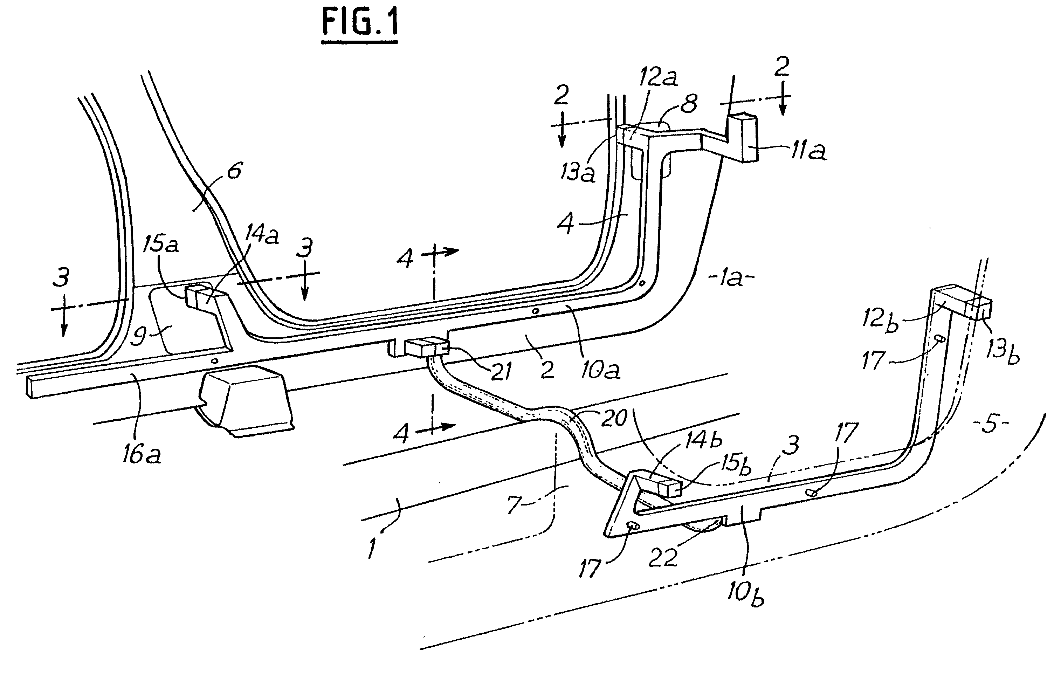

Sur la Fig. 1, on voit partiellement la structure d'un véhicule automobile comportant notamment un plancher 1 dont la partie avant 1a monte vers la planche de bord non représentée. La structure du véhicule comporte également, de chaque côté du plancher 1, un longeron gauche 2, un longeron droit 3 et des montants ou pieds avant, respectivement 4 et 5 et milieu, respectivement 6 et 7, entre lesquels sont placées une porte avant gauche et une porte avant droite non représentées sur la Fig. 1.

Le faisceau électrique se compose d'un tronçon gauche 10a et d'un tronçon droit 10b qui longent les bords latéraux du plancher 1.

Le tronçon gauche 10a comporte vers l'avant du véhicule un connecteur multiple principal 11a sur lequel vient se connecter la planche de bord du véhicule et qui distribue le courant aux différents points dudit véhicule.

D'autre part, le tronçon gauche 10a est muni d'un appendice transversal 12a traversant le montant avant 4 par une ouverture 8 et comportant à son extrémité un connecteur 13a notamment pour l'alimentation de la porte avant gauche.

Le tronçon gauche 10a comporte également, pour l'alimentation de la porte arrière gauche, un appendice transversal 14a muni d'un connecteur 15a et traversant le montant milieu 6 par une ouverture 9.

Les appendices 12a et 14a sont maintenus dans les montants 4 et 6 de la structure du véhicule, par exemple par fixation élastique de leur extrémité.

De manière identique, le tronçon droit 10b est muni de deux appendices transversaux 12b et 14b, comportant chacun à son extrémité un connecteur respectivement 13b et 15b pour l'alimentation de la porte avant droite et de la porte arrière droite. Ces appendices sont également maintenus dans les montants 5 et 7 de la structure du véhicule, par exemple, par fixation élastique.

De plus, le tronçon gauche 10a, comporte vers l'arrière du véhicule un prolongement 16a muni à son extrémité d'un connecteur multiple, non représenté, pour l'alimentation de l'arrière du véhicule.

Les tronçons 10a et 10b du faisceau électrique sont constitués d'un corps rigide contenant les fils et réalisé en matière plastique isolante, telle qu'une mousse durcie surmoulée sur les fils et sur les connecteurs reliés par lesdits fils.

Les tronçons 10a et 10b sont fixés respectivement sur le longeron gauche 2 et sur le longeron droit 3, par exemple par des attaches élastiques au moyen de petits doigts 17 faisant saillie sur une face du corps desdits tronçons et venus de matière avec ce corps pendant sa fabrication.

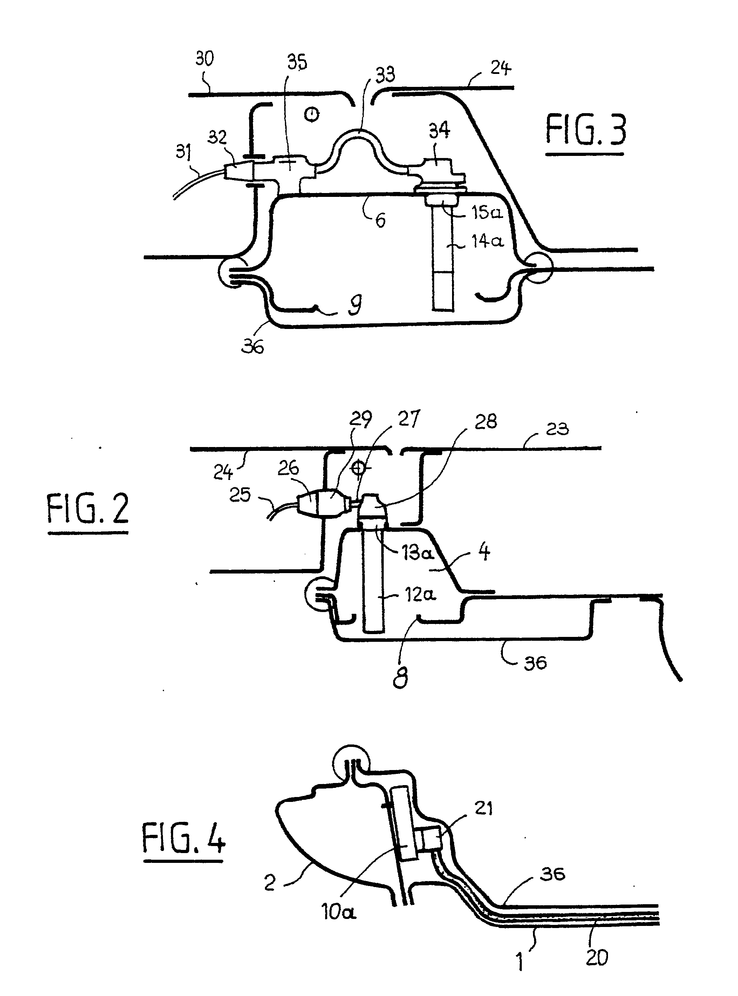

Comme il est visible sur les Figures 1 et 4, les tronçons rigides 10a et 10b sont reliés entre eux par un tronçon transversal 20 constitué par exemple par une nappe souple qui repose sur le plancher 1 et qui est munie de connecteurs extrêmes 21 et 22 la reliant aux deux tronçons rigides 10a et 10b.

En se reportant maintenant aux Figures 2 et 3, on va décrire les connexions électriques entre le tronçon rigide 10a et les portes avant gauche et arrière gauche du véhicule, les connexions entre le tronçon rigide 10b et les portes avant droite et arrière droite étant réalisées de manière identique.

Sur la Fig. 2, on a représenté schématiquement l'aile avant gauche 23, la porte avant gauche 24, ainsi que le montant avant 4 dans lequel débouche l'appendice 12a du tronçon 10a muni du connecteur 13a. La porte 24 comporte des organes devant être alimentés électriquement, qui ne sont pas représentés sur les dessins, mais qui sont reliés à un faisceau de conducteurs terminal 25, lui-même muni d'un connecteur d'extrémité 26. La connexion entre l'appendice 12a du tronçon rigide 10a et le faisceau terminal 25 est réalisée par un faisceau intermédiaire souple 27 se terminant à ses deux extrémités par des connecteurs 28 et 29 qui sont complémentaires des connecteurs 13a et 26.

De façon analogue, la porte arrière gauche 30 comprend des organes alimentés électriquement reliés à un faiscau de conducteurs terminal 31 muni d'un connecteur d'extrémité 32. La connexion entre l'appendice 14a du tronçon rigide 10a et le faisceau terminal 31 est réalisée par un faisceau intermédiaire souple 33 se terminant à ses deux extrémités par des connecteurs 34 et 35 qui sont complémentaires des connecteurs 15a et 32.

Les tronçons rigides 10a et 10b, ainsi que le tronçon souple 20 recouverts d'un garnissage 36 ou peuvent éventuellement être solidaires de l'élément de garnissage de l'habitacle du véhicule, voire intégrés à ce garnissage.

Enfin, les tronçons rigides 10a et 10b peuvent également comporter d'autres connecteurs multiples pour alimenter d'autres organes du véhicule.

Les avantages de ce faisceau électrique selon l'invention résultent clairement de la description qui vient d'être faite. Le faisceau électrique étant constitué par des tronçons rigides fixés sur la structure du véhicule par des moyens simples et fiables, permet donc un montage entièrement automatisé.

Il en résulte donc un gain appréciable lors du montage sur une chaîne de fabrication.

## Revendications

1. Faisceau électrique de véhicule automobile composé de plusieurs tronçons (10a, 10b, 20) reliés entre eux et regroupant chacun plusieurs fils conducteurs, l'un au moins des tronçons (10a, 10b, 20) étant constitué d'un corps rigide dont l'une au moins des extrémités est munie d'un connecteur multiples (11a, 13a, 15a, 13b, 15b, 21, 22), caractérisé en ce que ledit connecteur multiple (11a, 13a, 15a, 13b, 15b) est rigidement solidaire dudit tronçon rigide (10a, 10b, 20) de manière à réaliser un montage automatique simultané du tronçon et du connecteur multiple.

2. Faisceau électrique selon la revendication 1, caractérisé en ce que le corps dudit tronçon rigide est réalisé en matière plastique isolante, telle qu'une mousse durcie surmoulée sur les fils et sur les connecteurs (11a, 13a, 15a, 134b, 15b).

3. Faisceau électrique selon les revendications 1 et 2, caractérisé en ce que l'un au moins des tronçons rigides (10a, 10b) comporte au moins un appendice transversal (12a, 14a, 12b, 14b, qui traverse un montant (4, 5, 6, 7) de la structure du véhicule et qui est maintenu dans ledit montant par fixation élastique de son extrémité munie d'un connecteur (13a, 15a, 13b, 15b), notamment pour l'alimentation électrique d'une porte (24, 30) de véhicule.

4. Faisceau électrique selon la revendication 3, caractérisé en ce que le tronçon rigide (10a), longeant un bord latéral (2) du plancher (1) est relié par un tronçon transversal souple (20) à un second, tronçon rigide (10b) longeant l'autre bord latéral (3) dudit plancher (1).

5. Faisceau électrique selon la revendication 4, caractérisé en ce que le tronçon souple (20) repose sur le plancher (1) du véhicule et est muni de connecteurs extrêmes (21, 22) le reliant aux deux tronçons rigides (10a, 10b).

8. Faisceau électrique selon la revendication 1, caractérisé en ce qu'au moins un tronçon rigide (10a, 10b) est éventuellement solidaire d'un élément de garnissage (36) de l'habitacle du véhicule.

## Claims

1. An electrical loom for a motor vehicle, consisting of a plurality of portions (10a, 10b, 20) connected inter se and each of which comprises a plurality of conductor wires, at least one of the portions (10a, 10b, 20) consisting of a rigid body of which at least one of the ends is provided with a multiple connector (11a, 13a, 15a, 13b, 15b, 21, 22) characterised in that the said multiple connector (11a, 13a, 15, 13b, 15b) is rigidly connected to the said rigid portion (10a, 10b, 20) in order to achieve a simultaneous automatic assembly of the portion and the multiple connector.

2. An electrical loom according to claim 1, characterised in that the body of the said rigid portion is produced from insulating plastics material such as a hardened foam material moulded onto the wires and onto the connectors (11a, 13a, 15a, 13b, 15b).

3. An electrical loom according to claims 1 and 2, characterised in that at least one of the rigid portions (10a, 10b) comprises at least one transverse member (12a, 14a, 12b, 14b) which traverses an upright (4, 5, 6, 7) of the structure of the vehicle and which is maintained in the said upright by the resilient fixing of its end provided with a connector (13a, 15a, 13b, 15b), particularly for the supply of electricity to a door (24, 30) of the vehicle.

4. An electrical loom according to claim 3, characterised in that the rigid portion (10a) along the lateral edge (2) of the floor board (1) is connected by a flexible transverse portion (20) to a second rigid portion (10b) extending along the other lateral edge (3) of the said floor board (1).

5. An electrical loom according to claim 4, characterised in that the flexible portion (20) rests on the floor board (1) of the vehicle and is provided with end connectors (21, 22) which connect it to the two rigid portions (10a, 10b).

6. An electrical loom according to claim 1, characterised in that at least one rigid portion (10a, 10b) is possibly rigid with an element (36) for lining the passenger compartment of the vehicle.

**Patentansprüche**

1. Elektrischer Kabelbaum für Kraftfahrzeuge, mit mehreren Abschnitten (10a, 10b, 20), die miteinander verbunden sind und jeweils mehrere Leitungsdrähte umfassen, wobei mindestens einer dieser Abschnitte (10a, 10b, 20) einen starren Körper aufweist, der an mindestens einem seiner Enden mit einem Mehrfach-Leitungsverbinder (11a, 13a, 15a, 13b, 15b, 21, 22) versehen ist, dadurch gekennzeichnet, daß der Mehrfach-Leitungsverbinder (11a, 13a, 15a, 13b, 15b) mit dem starren Abschnitt (10a, 10b, 20) derart starr verbunden ist, daß der Abschnitt und der Mehrfach-Leitungsverbinder automatisch gleichzeitig montierbar sind.

2. Elektrischer Kabelbaum nach Anspruch 1, dadurch gekennzeichnet, daß der Körper des starren Abschnittes aus einem isolierenden Kunststoffmaterial gebildet ist, wie einem Hartschaum, der um die Drähte und die Leitungsverbinder (11a, 13a, 15a, 13b, 15b) geformt ist.

3. Elektrischer Kabelbaum nach Anspruch 1 oder 2, dadurch gekennzeichnet, daß mindestens einer der starren Abschnitte (10a, 10b) mindestens einen transversalen Ansatz (12a, 14a, 12b, 14b) aufweist, der einen Ständer (4, 5, 6, 7) des Aufbaus des Fahrzeuges durchquert und der in dem genannten Ständer durch elastische Befestigung seines mit einem Leitungsverbinder (13a, 15a, 13b, 15b) versehenen Endes in dem Ständer gehaltert ist, insbesondere zur Stromversorgung einer Türe (24, 30) des Fahrzeugs.

4. Elektrischer Kabelbaum nach Anspruch 3, dadurch gekennzeichnet, daß der starre Abschnitt (10a), der längs eines seitlichen Randes eines Bodens (1) verläuft, durch einen biegsamen Querabschnitt (20) mit einem zweiten starren Abschnitt (10b) verbunden ist, der längs des anderen seitlichen Randes (3) des Bodens (1) verläuft.

5. Elektrischer Kabelbaum nach Anspruch 4, dadurch gekennzeichnet, daß der biegsame Abschnitt (20), auf dem Boden (1) des Fahrzeuges ruht und mit End-Leitungsverbindern (21, 22) zum Anschluß an die beiden starren Abschnitte (10a, 10b) versehen ist.

6. Elektrischer Kabelbaum nach Anspruch 1, dadurch gekennzeichnet, daß mindestens ein starrer Abschnitt (10a, 10b) gegebenenfalls mit einem Verkleidungselement (36) der Kabine des Fahrzeuges verbunden ist.

FIG.1

FIG. 3

FIG. 2

FIG. 4